# FASCICULE DE BREVET EUROPEEN

(11) **EP 2 539 167 B1**
(45) Date de publication et mention de la délivrance du brevet: **02.04.2014**
(21) Numéro de dépôt: 11707457.5
(22) Date de dépôt: 04.02.2011
(51) Int. Cl.: B60K 1/04, B60S 5/06, B60L 3/00, B60L 11/14, B60L 11/18, H01M 10/42, H01M 10/48

(54) **Système de connexion de batteries pour véhicule électrique et ensemble de batteries associé**
SYSTEM ZUM ANSCHLIESSEN VON BATTERIEN FÜR EIN ELEKTROFAHRZEUG UND ENTSPRECHENDER SATZ VON BATTERIEN
SYSTEM FOR CONNECTING BATTERIES FOR AN ELECTRIC VEHICLE AND ASSOCIATED SET OF BATTERIES

(30) Priorité: 24.02.2010 FR 1051316
(43) Date de publication de la demande: 02.01.2013
(73) Titulaire: Renault SAS, 92100 Boulogne Billancourt (FR)
(72) Inventeur: JAFFREZIC, Xavier, F-78140 Velizy Villacoublay (FR)
(86) Numéro de dépôt international: PCT/FR2011/050225
(87) Numéro de publication internationale: WO 2011/104460

(56) Documents cités:
- EP-A2- 1 372 125
- WO-A1-2008/123543
- DE-A1-102007 032 210
- FR-A1- 2 880 476

## Description

L'invention concerne les véhicules automobiles à propulsion électrique comprenant des batteries destinées à être reçues dans un compartiment prévu sur le véhicule.

Plus particulièrement l'invention concerne les systèmes de connexion de batteries au moteur électrique d'un véhicule automobile.

Aujourd'hui, les batteries présentes dans les véhicules électriques ont une autonomie relativement faible. Afin de répondre au besoin des consommateurs, les batteries ont été modifiées de façon à devenir amovible afin d'être échangées rapidement lorsqu'elles sont vides. Les batteries sont placées dans un ensemble de batteries, puis l'ensemble de batteries est inséré dans un compartiment dédié situé sous le plancher du véhicule. L'ensemble de batteries doit donc être accessible facilement afin que les batteries soient remplacées rapidement lorsqu'elles sont déchargées, de manière à conférer à l'usager du véhicule une plus grande autonomie. Cette opération de remplacement doit, à la fois, être rapide et parfaitement sécurisée.

On a déjà tenté, dans l'état de la technique, d'atteindre cet objectif.

On pourra à cet égard se référer au document FR 2 798 342 qui propose un dispositif permettant l'interchangeabilité facile et rapide d'un ensemble de batteries dans un véhicule électrique. Un ensemble de batteries est inséré sous le châssis d'un véhicule électrique, puis bloqué en position par des crochets. Une carte à puce est située sur l'ensemble de batteries et permet de connaître le coût du chargement de l'ensemble des batteries. Ce document ne permet pas l'obtention d'une connexion électrique sécurisée entre les batteries et le moteur électrique d'un véhicule.

On pourra également se référer au document WO 02/04275 qui décrit l'insertion d'une batterie dans un compartiment prévu sous le châssis d'un véhicule électrique et des moyens de verrouillage de la batterie dans le compartiment. Lorsque la batterie est insérée dans le compartiment, ses bornes sont en contact avec des moyens électriques du véhicule, permettant ainsi un échange d'énergie entre la batterie et le véhicule. Le contact électrique entre les batteries et le véhicule est créé dès l'insertion de la batterie dans le compartiment. Aucune vérification du blocage en position et du verrouillage de la batterie n'est effectuée avant la connexion électrique de la batterie au moteur électrique.

Un système de connexion d'un ensemble de batteries comprenant les caractéristiques du préambule de la revendication 1 est connu du document DE 10 2007 032 210 A1.

Les solutions proposées dans l'état de la technique ne permettent pas de mettre en oeuvre une opération de remplacement des batteries parfaitement sécurisée.

L'objectif de l'invention est donc de pallier ces inconvénients et de fournir un système de connexion d'un ensemble de batteries rapide, robotisé et sécurisé, afin de minimiser les échanges d'énergie entre la batterie et le véhicule lorsque la batterie n'est pas convenablement positionnée et verrouillée dans un compartiment dédié dans le véhicule, ainsi que de minimiser les risques de court-circuit des batteries.

Dans un mode de réalisation, l'invention concerne un système de connexion d'un ensemble de batteries destinées à alimenter au moins un moteur électrique de propulsion d'un véhicule automobile et destiné à être reçu dans un compartiment prévu sur le véhicule.

Chaque batterie comprend une unité de traitement logique, un module de communication et des moyens de connexion au moteur. Le véhicule comprend une unité de traitement logique connectée à une batterie auxiliaire fixe, un module de communication apte à communiquer avec le module de communication de chaque batterie et des moyens de verrouillage et de blocage en position des batteries. La batterie utilise sa propre énergie pour assurer la communication entre les modules de communication. De cette manière, aucun échange d'énergie n'est effectué entre les batteries et le véhicule tant que les batteries ne reçoivent pas un signal d'autorisation du module de communication du véhicule.

Le système de connexion comporte en outre des moyens de verrouillage et de fermeture du compartiment et un premier moyen de détection associé au véhicule. Le premier moyen de détection est capable de détecter l'état des moyens de verrouillage et de fermeture du compartiment.

Selon l'invention, le système de connexion comporte un moyen de détection associé à chacune des batteries. Le moyen de détection est capable de détecter l'état des moyens de verrouillage et de blocage en position de chaque batterie. De cette façon, la sécurité du système de connexion est renforcée par une double vérification des moyens de verrouillage et de blocage en position des batteries.

Les moyens de connexion peuvent comprendre un dispositif actionneur mécanique capable de connecter les batteries au moteur électrique du véhicule. Le dispositif mécanique peut être de type micro actionneur.

Les moyens de connexion peuvent comprendre un dispositif actionneur électrique capable de connecter les batteries au moteur électrique du véhicule. Le dispositif électrique peut être de type relais.

Avantageusement, les modules de communication des batteries et du véhicule peuvent comprendre des moyens optiques d'échange d'information.

Les modules de communication des batteries et du véhicule peuvent également comprendre des moyens de réception et d'émission d'ondes radio.

Selon au second aspect, l'invention concerne un ensemble de batteries destinées à alimenter au moins un moteur électrique de propulsion d'un véhicule automobile. Chaque batterie comprend une unité de traitement logique, un module de communication et des moyens de connexion au véhicule.

Avantageusement, chaque batterie comprend un moyen de détection de son verrouillage et de son blocage en position.

Les moyens de connexion peuvent comprendre un dispositif actionneur mécanique ou un dispositif actionneur électrique capable de connecter les batteries au moteur électrique du véhicule.

Les modules de communication de l'ensemble des batteries et du véhicule peuvent comprendre des moyens optiques d'échange d'information ou des moyens de réception et d'émission d'ondes radio.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente très schématiquement une vue en coupe d'un châssis de véhicule équipé d'un ensemble de batteries selon l'invention ;
- la figure 2 représente une vue en coupe selon II-II de la figure 1 ;
- la figure 3 représente un autre mode de réalisation de la figure 2 ;
- la figure 4 illustre, de manière schématique, les principaux éléments d'un système de connexion de batteries sur un véhicule selon l'invention.

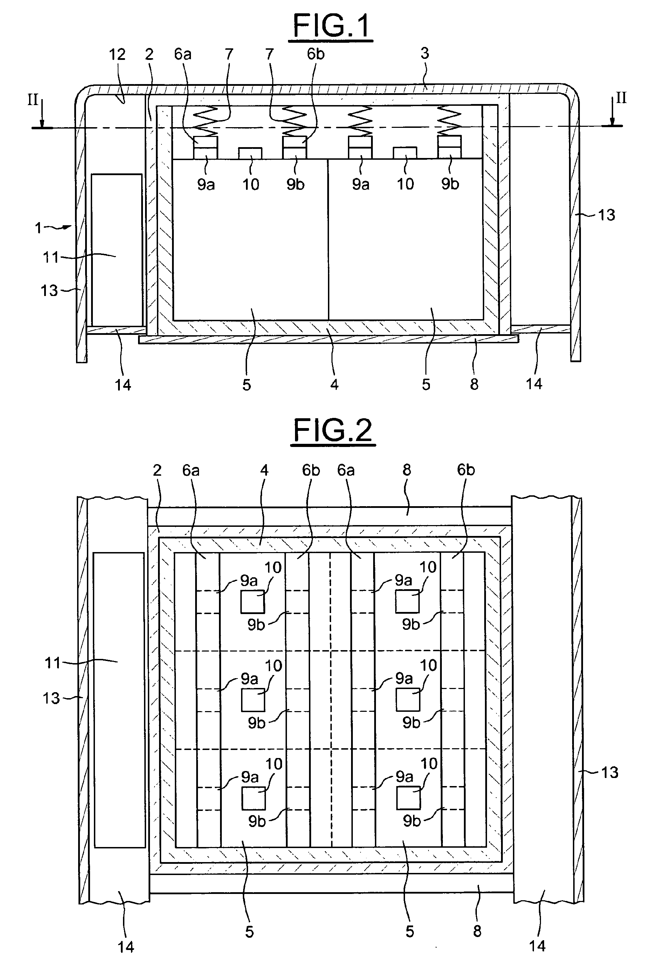

Le châssis 1 d'un véhicule représenté sur la figure 1 comprend un compartiment 2 fixé sous le plancher 3 du véhicule. Le compartiment 2 est adapté pour recevoir en ensemble 4 de batteries 5 afin de les connecter électriquement au véhicule à l'aide de moyens de connexion 6 fixés sur le véhiculé à l'aide de moyens 7. Les moyens de connexions 6a correspondent au pôle positif et les moyens de connexions 6b correspondent au pôle négatif. Les batteries 5 peuvent être, à titre d'exemple non limitatif, situées sur deux rangées. Toutefois, il pourrait être envisagé d'insérer un nombre de rangées de batteries 5 supérieur à deux dans le compartiment 2, en fonction du besoin énergétique.

L'ensemble de batteries 4 est enfermé dans le compartiment 2 à l'aide d'un moyen de fermeture 8 du compartiment 2.

Chaque batterie 5 comprend des bornes 9 et un moyen de communication 10. Les bornes 9 sont au nombre de deux. Une des bornes 9a correspond au pôle positif et l'autre borne 9b correspond au pôle négatif. Les moyens de connexion 6a et 6b situés sur le véhicule sont au nombre de deux, de façon à être en contact respectivement avec le pôle positif de chacune des batteries 5 et le pôle négatif de chacune des batteries 5. Ces moyens de connexions 6a et 6b sont ensuite reliés à l'alimentation du moteur électrique du véhicule (non représentée) afin de permettre la propulsion électrique de celui-ci.

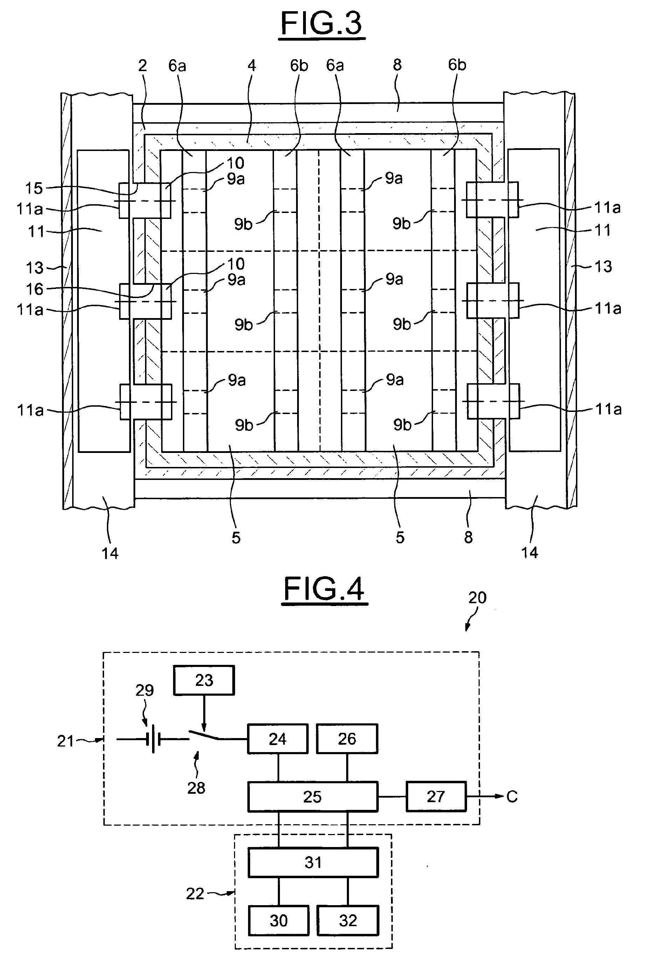

Le moyen de communication 10 comprend un module de communication connecté à une unité de traitement logique, comme on le verra lors de l'étude de la figure 3. L'unité de traitement logique du moyen de communication 10 est dite 'mobile' dans la mesure où elle est fixée sur une des batteries 5 amovibles. Les batteries 5 utilisent leur propre énergie afin d'alimenter leur moyen de communication 10.

Le châssis 1 du véhicule comprend en outre un moyen de communication 11 situé dans un logement 12 entre le compartiment 2 et la carrosserie 13 dudit véhicule. Le moyen de communication 11 est fixé sur un support 14 et comprend un module de communication et une unité de traitement logique comme on le verra lors de l'étude de la figure 3. Le module de communication du véhicule est configuré de façon à communiquer avec chaque module de communication situés sur chaque batterie 5. Le module de communication du moyen de communication 9 est connecté à l'unité de traitement logique dite 'fixe' dans la mesure où elle est située sur le véhicule. Le véhicule comprend une batterie fixe auxiliaire (non représentée) permettant au moyen de communication 11 de fonctionner sans échange d'énergie avec les batteries 5.

La figure 2 représente une vue en coupe du châssis 1 selon II-II de la figure 1. Les batteries 5 sont, à titre d'exemple non limitatif, au nombre de six. Chacune des batteries 5 comprend deux bornes 9a et 9b. Les moyens de connexion 6a et 6b situés sur le véhicule sont des barres de contact, de façon à être en contact respectivement avec le pôle positif 6a des batteries 5 et le pôle négatif 6b des batteries 5. Ces moyens de connexions 6a et 6b sont ensuite reliés à l'alimentation du moteur électrique du véhicule (non représentée) afin de permettre la propulsion électrique de celui-ci.

Les moyens de communication 10 et 11 peuvent comprendre des moyens de réception et d'émission d'ondes radio (non représentés). Ce mode de réalisation nécessite l'établissement d'un protocole protégé et crypté de façon à ce que les ondes extérieures ne puissent pas interférer avec les moyens de communication 10 et 11.

Dans le mode de réalisation illustré à la figure 3, les moyens de communications 10 et 11 peuvent comprendre, à titre d'exemple, des moyens optiques d'échange d'information (non représentés). Chaque batterie comporte une fenêtre 10 à travers laquelle des moyens optiques (non représentés) peuvent échanger des informations avec des moyens optiques 11a situés sur le véhicule de telle façon que l'échange d'information ne peut avoir lieu que si la batterie 5 est correctement placée dans le compartiment 2. L'échange d'information n'est possible que si le compartiment 2 comprend une fenêtre 15 et que l'ensemble 4 de batteries comprend également une fenêtre 16. Les fenêtres 10, 16, 15 et le moyen optique 11a sont sur le même axe, afin de permettre le passage du flux optique. Les moyens de communication 11 sont au nombre de deux, de manière à communiquer avec les deux rangées de batteries 5.

La communication entre les batteries 5 et le véhicule par le biais de moyens optiques d'échange d'information permet une double sécurité de blocage en position de la batterie 5 dans la mesure où la communication n'est pas possible si la batterie 5 n'est pas bien positionnée. De plus, la présence de lumière est facilement détectée à l'aide des moyens optiques. De cette manière, il est facile de détecter si le compartiment 2 est bien fermé.

En se référant maintenant à la figure 4 qui illustre à titre d'exemple les principaux éléments d'un système de connexion d'un ensemble de batteries sur un véhicule, le système de connexion 20 comprend un module 21 associé à chaque batterie 5 et un module 22 associé au véhicule.

Le module 21 comprend un moyen d'activation 23, une unité mobile de traitement logique 24, un module de communication 25, un moyen de détection 26 du verrouillage et du blocage en position de la batterie 5 et un moyen de connexion 27 électrique de la batterie 5 sur le moteur électrique du véhicule. Le moyen d'activation 23 alimente l'unité mobile de traitement logique 24 par le biais d'un contacteur 28 et d'une alimentation 29 des batteries 5 lorsque l'ensemble de batteries 4 est engagé dans le compartiment 2 illustré à la figure 2.

Le module 22 comprend une unité fixe de traitement logique 30, un module de communication 31 et des moyens de détection 32 du verrouillage et de la fermeture du compartiment 2 et du verrouillage de la batterie 5.

Le module de communication 25 est apte à communiquer avec le module de communication 31.

Le verrouillage de la batterie peut se faire, à titre d'exemple non limitatif, de manière manuelle. Toutefois, il pourra être de type électromécanique. L'état du verrouillage et du blocage en position de la batterie 5 est vérifié à la fois par le véhicule et/ou par la batterie. L'état de la fermeture et du verrouillage du compartiment 2 est uniquement vérifié par le véhicule. On pourrait envisager que l'état de la fermeture et du verrouillage du compartiment 2 soit également vérifié par chacune des batteries 5.

Lorsque la batterie 5 se trouve à l'extérieur du véhicule, le moyen de connexion 27 n'est pas activé. Ainsi les risques de manipulations et de court-circuit peuvent être évités. L'unité mobile de traitement logique 24 alimentée par l'énergie de la batterie 5 est elle aussi inactive à l'extérieur du véhicule, de manière à éviter la décharge inutile de la batterie.

Dès l'insertion de l'ensemble de batteries 4 dans le compartiment 2, le moyen d'activation 23 active par le biais du contacteur 28, l'unité mobile de traitement logique 24. L'unité mobile de traitement logique 24 établit une communication entre le module de communication 25 de la batterie 5 et le module de communication 31 du véhicule. Le module de communication 25 effectue une requête au module de communication 31 afin de savoir si le moyen de connexion 27 peut être activé. La requête est effectuée en boucle continue jusqu'à l'obtention de l'autorisation de connexion de la part du module de communication 31. Chacun des modules de communication 25 et 31 vérifie que la batterie 5 correspondante est bien verrouillée et bloquée en position dans le compartiment 2. Les moyens de détection 26 et 32 du verrouillage et du blocage en position de la batterie 5 envoient des signaux traduisant l'état du verrouillage et du positionnement de la batterie 5 respectivement aux modules de communication 25 et 31. Le moyen de détection 32 permet également de vérifier l'état du verrouillage et de la fermeture du compartiment 2.

Lorsque le module de communication 31 reçoit le signal d'état verrouillé et fermé du compartiment 2, il répond de façon positive à la requête envoyée par le module de communication 25. Une fois la réponse positive reçue par le module de communication 25 et une fois que le module de communication 25 a également reçu le signal d'état verrouillé et bloqué en position de la batterie 5 par le biais du moyen 26, le module de communication 25 active le moyen de connexion 27. Le moyen de connexion 27 permet la connexion C de la batterie 5 au moteur électrique du véhicule.

Les moyens de connexion 27 peuvent être de plusieurs types. A titre d'exemple non limitatif, les batteries illustrées sur les figures 1, 2 et 3 sont des batteries 5 à bornes 9 apparentes. Dans ce mode de réalisation, les bornes 9a et 9b des batteries 5 sont inertes et n'échangent pas d'énergie. Le moyen de connexion 27 peut, dans ce cas, être composé d'un relais permettant la mise sous tension des bornes 9a et 9b et la connexion C électrique de la batterie 5 au moteur électrique du véhicule.

Toutefois, il peut être envisagé d'utiliser des batteries à bornes masquées actives. Dans ce mode de réalisation, le moyen de connexion 27 peut comprendre un micro actionneur permettant d'actionner les bornes de la batterie de façon à les rendre apparentes. Ce dernier mode de réalisation a pour avantage de protéger les bornes de la batterie pendant les manipulations.

Grâce à l'invention qui vient d'être décrite, la connexion des ensembles de batteries destinées à alimenter un moteur électrique de propulsion d'un véhicule automobile est sécurisée, rapide et robotisée.

L'invention permet aux utilisateurs de véhicules électriques de changer leurs batteries de façon simple et rapide afin d'être aussi autonome qu'avec un véhicule thermique. Chacune des batteries et le véhicule sont considérés comme des systèmes autonomes communiquant entre eux, de façon à connecter les batteries au moteur électrique uniquement lorsque tous les paramètres de sécurité ont été vérifiés par le véhicule et/ou par chacune des batteries. De cette manière, le remplacement des batteries vides par des batteries chargées est totalement sécurisé et peut être fait plus rapidement.

## Revendications

1. Système de connexion (20) d'un ensemble de batteries (4) destinées à alimenter au moins un moteur électrique de propulsion d'un véhicule automobile et destiné à être reçu dans un compartiment (2) prévu sur le véhicule, chaque batterie (5) comprenant une unité de traitement logique (24), un module de communication (25) et des moyens de connexion (27) au moteur, et le véhicule comprenant une unité de traitement logique (30) connectée à une batterie auxiliaire fixe, un module de communication (31) apte à communiquer avec le module de communication (25) de chaque batterie (5) et des moyens de verrouillage et de blocage en position des batteries (5), ledit système étant **caractérisé en ce qu'**il comporte en outre un moyen de détection (26, 32) associé à chacune des batteries, le moyen de détection (26, 32) étant capable de détecter l'état des moyens de verrouillage et de blocage en position de chaque batterie (5).

2. Système de connexion selon la revendication 1, **caractérisé en ce qu'**il comporte des moyens de verrouillage et de fermeture du compartiment (2) et un moyen de détection (32) associé au véhicule, le moyen de détection (32) étant capable de détecter l'état des moyens de verrouillage et de fermeture du compartiment (2).

3. Système de connexion selon l'une quelconque des revendications précédentes, **caractérisé en ce que** les moyens de connexion (27) comprennent un dispositif actionneur mécanique capable de connecter les batteries au moteur électrique du véhicule.

4. Système de connexion selon l'une quelconque des revendications 1 à 2, **caractérisé en ce que** les moyens de connexion (27) comprennent un dispositif actionneur électrique capable de connecter les batteries au moteur électrique du véhicule.

5. Système de connexion selon l'une quelconque des revendications précédentes, **caractérisé en ce que** les modules de communication (25, 31) des batteries (5) et du véhicule comprennent des moyens optiques d'échange d'information.

6. Système de connexion selon l'une quelconque des revendications 1 à 3, **caractérisé en ce que** les modules de communication (25, 31) des batteries (5) et du véhicule comprennent des moyens de réception et d'émission d'ondes radio.

7. Ensemble de batteries (4) destinées à alimenter au moins un moteur électrique de propulsion d'un véhicule automobile, chaque batterie (5) comprenant une unité de traitement logique (24), un module de communication (25) et des moyens de connexion au véhicule (27), **caractérisé en ce que** chaque batterie (5) comprend un moyen de détection (26) de son verrouillage et de son blocage en position.

8. Ensemble de batteries selon la revendication 7, **caractérisé en ce que** les moyens de connexion (27) comprennent un dispositif actionneur capable de connecter les batteries (5) au moteur électrique du véhicule.

## Patentansprüche

1. Anschlusssystem (20) für eine Gesamtheit von Batterien (4), die dazu bestimmt sind, wenigstens einen Antriebselektromotor eines Kraftfahrzeugs zu versorgen, und dazu bestimmt sind, in einem in dem Fahrzeug vorgesehenen Aufnahmefach (2) aufgenommen zu werden, wobei jede Batterie (5) eine Logikverarbeitungseinheit (24), ein Kommunikationsmodul (25) und Motoranschlussmittel (27) umfasst und wobei das Fahrzeug eine Logikverarbeitungseinheit (30), die mit einer festen Hilfsbatterie verbunden ist, ein Kommunikationsmodul (31), das mit dem Kommunikationsmodul (25) jeder Batterie (5) kommunizieren kann, und Positionsverriegelungs- und Positionsblockiermittel für die Batterien (5) umfasst, wobei das System **dadurch gekennzeichnet ist, dass** es außerdem ein Detektionsmittel (26, 32) umfasst, das jeder der Batterien zugeordnet ist, wobei das Detektionsmittel (26, 32) den Zustand der Positionsverriegelungs- und Positionsblockiermittel für jede Batterie (5) detektieren kann.

2. Anschlusssystem nach Anspruch 1, **dadurch gekennzeichnet, dass** es Verriegelungs- und Schließmittel für das Aufnahmefach (2) und ein dem Fahrzeug zugeordnetes Detektionsmittel (32) umfasst, wobei das Detektionsmittel (32) den Zustand der Verriegelungs- und Schließmittel des Aufnahmefachs (2) detektieren kann.

3. Anschlusssystem nach einem der vorhergehenden Ansprüche, **dadurch gekennzeichnet, dass** die Anschlussmittel (27) eine mechanische Aktorvorrichtung umfassen, die die Batterien an den Elektromotor des Fahrzeugs anschließen können.

4. Anschlusssystem nach einem der Ansprüche 1 bis 2, **dadurch gekennzeichnet, dass** die Anschlussmittel (27) eine elektrische Aktorvorrichtung umfassen, die die Batterien an den Elektromotor des Fahrzeugs anschließen können.

5. Anschlusssystem nach einem der vorhergehenden Ansprüche, **dadurch gekennzeichnet, dass** die Kommunikationsmodule (25, 31) der Batterien (5) bzw. des Fahrzeugs optische Informationsaustauschmittel umfassen.

6. Anschlusssystem nach einem der Ansprüche 1 bis 3, **dadurch gekennzeichnet, dass** die Kommunikationsmodule (25, 31) der Batterien (5) bzw. des Fahrzeugs Mittel zum Empfangen und Senden von Funkwellen umfassen.

7. Gesamtheit von Batterien (4), die dazu bestimmt sind, wenigstens einen elektrischen Antriebsmotor eines Kraftfahrzeugs zu versorgen, wobei jede Batterie (5) eine Logikverarbeitungseinheit (24), ein Kommunikationsmodul (25) und Fahrzeuganschlussmittel (27) umfasst, **dadurch gekennzeichnet, dass** jede Batterie (5) ein Mittel (26) zum Detektieren ihrer Verriegelung und ihrer Blockierung an ihrer Position umfasst.

8. Gesamtheit von Batterien nach Anspruch 7, **dadurch gekennzeichnet, dass** die Anschlussmittel (27) eine Aktorvorrichtung umfassen, die die Batterien (5) an den Elektromotor des Fahrzeugs anschließen kann.

## Claims

1. Connection system (20) for a battery pack (4) designed to power at least one electric motor for propelling a motor vehicle and designed to be accommodated in a compartment (2) provided on the vehicle, each battery (5) comprising a logical processing unit (24), a communication module (25) and connection means (27) for connection to the motor, and the vehicle comprising a logical processing unit (30) connected to a fixed auxiliary battery, a communication module (31) capable of communicating with the communication module (25) of each battery (5) and means for locking and immobilizing the batteries (5) in position, said system being **characterized in that** it also comprises a detection means (26, 32) associated with each of the batteries, the detection means (26, 32) being capable of detecting the state of the means for locking and immobilizing each battery (5) in position.

2. Connection system according to Claim 1, **characterizing in that** it comprises means for locking and closing the compartment (2) and a detection means (32) associated with the vehicle, the detection means (32) being capable of detecting the state of the means for locking and closing the compartment (2).

3. Connection system according to either one of the preceding claims, **characterized in that** the connection means (27) comprise a mechanical actuating device capable of connecting the batteries to the electric motor of the vehicle.

4. Connection system according to either one of Claims 1 and 2, **characterized in that** the connection means (27) comprise an electric actuating device capable of connecting the batteries to the electric motor of the vehicle.

5. Connection system according to any one of the preceding claims, **characterized in that** the communication modules (25, 31) of the batteries (5) and of the vehicle comprise optical data interchange means.

6. Connection system according to any one of Claims 1 to 3, **characterized in that** the communication modules (25, 31) of the batteries (5) and of the vehicle comprise radiowave receiving and transmitting means.

7. Battery pack (4) designed to power at least one electric motor for propelling a motor vehicle, comprising a logical processing unit (24), a communication module (25) and connection means (27) for connection to the vehicle, **characterized in that** each battery (5) comprises a detection means (26) for detecting its locking and its immobilization in position.

8. Battery pack according to Claim 7, **characterized in that** the connection means (27) comprise an actuating device capable of connecting the batteries (5) to the electric motor of the vehicle.
